# EUROPÄISCHE PATENTANMELDUNG

(11) **EP 2 052 825 A2**
(43) Veröffentlichungstag der Anmeldung: **29.04.2009**
(21) Anmeldenummer: 08450163.4
(22) Anmeldetag: 22.10.2008
(51) Int. Cl.: B29B 9/06

(54) **Vorrichtung zum Granulieren von Kunststoff**

(30) Priorität: 23.10.2007 AT 17132007
(71) Anmelder: ECON Maschinenbau und Steuerungstechnik Gmbh, 4616 Weisskirchen/Traun (AT)
(72) Erfinder: Hehenberger, Gerhard, 4622 Eggendorf (AT)
(74) Vertreter: Hübscher, Helmut

(57) **Zusammenfassung**

Es wird eine Vorrichtung zum Granulieren von Kunststoff mit einem Granulierkopf (1), der eine Lochscheibe (2) zum Austritt von Kunststoffsträngen und einen zur Lochscheibe (2) koaxialen Rotor (3) mit Granuliermessern (4) zum Schneiden der aus der Lochplatte (2) austretenden Kunststoffstränge umfasst, und mit einem den Granulierkopf (1) aufnehmenden Gehäuse (5) beschrieben, das zur Achse des Granulierkopfes (1) senkrechte Stirnwände (8, 9) und diese Stirnwände (8, 9) verbindende Umfangswände (10) besitzt und auf zwei einander bezüglich der Granulierkopfachse gegenüberliegenden Seiten Anschlüsse (11, 12) für die Zu- und Abfuhr eines Kühl- und Förderluftstroms bildet. Um ein Verklumpen des Granulats zu vermeiden, wird vorgeschlagen, dass der Durchmesser des Anschlusses (11) für die Zufuhr des Kühl- und Förderluftstroms kleiner als der des Anschlusses (12) für die Abfuhr ist und dass die Umfangswände (10) unter einem zumindest angenähert gleichen Winkel (α) von den beiden Anschlüssen (11, 12) für den Kühl- und Förderluftstrom gegen den Granulierkopf (1) hin auseinanderlaufen und vom äußeren Umlaufkreis der Granuliermesser (4) einen radialen Abstand aufweisen, der zumindest dem eineinhalbfachen Radius dieses Umlaufkreises entspricht.

## Beschreibung

Die Erfindung bezieht sich auf eine Vorrichtung zum Granulieren von Kunststoff mit einem Granulierkopf, der eine Lochscheibe zum Austritt von Kunststoffsträngen und einen zur Lochscheibe koaxialen Rotor mit Granuliermessern zum Schneiden der aus der Lochplatte austretenden Kunststoffstränge umfasst, und mit einem den Granulierkopf aufnehmenden Gehäuse, das zur Achse des Granulierkopfes senkrechte Stirnwände und diese Stirnwände verbindende Umfangswände besitzt und auf zwei einander bezüglich der Granulierkopfachse gegenüberliegenden Seiten Anschlüsse für die Zu- und Abfuhr eines Kühl- und Förderluftstroms bildet.

Üblicherweise werden Kunststoffe granuliert, indem die Kunststoffschmelze in Form von Kunststoffsträngen durch eine Lochplatte gedrückt wird, die mit einem zur Lochscheibe koaxialen Rotor zusammenwirkt, der mit Granuliermessern bestückt ist, sodass die aus der Lochplatte in ein Kühlwasser austretenden Kunststoffstränge geschnitten werden und das gebildete Granulat mit dem Kühlwasser weitergefördert wird, das für eine entsprechende Erstarrung der Kunststoffgranulate sorgt. Neben einer solchen Unterwassergranulierung ist es außerdem bekannt (WO 93/15892 A1), den Granulierkopf in einem Gehäuse vorzusehen, das von einem Kühl- und Förderluftstrom durchströmt wird, um insbesondere temperaturempfindliche Kunststoffarten granulieren zu können. Dieser Kühl- und Förderluftstrom erfasst die von den rotierenden Messern abgeschleuderten Granulate, wobei jedoch die Gefahr einer Klumpenbildung besteht, weil das entstehende Granulat zum Unterschied zu einer Granulierung in Wasser mit Hilfe des Luftstromes in manchen Fällen nicht ausreichend rasch abgekühlt werden kann, um ein Aneinanderhaften der Granulatteilchen bei einer gegenseitigen Berührung zu verhindern.

Der Erfindung liegt somit die Aufgabe zugrunde, eine Vorrichtung zum Granulieren von Kunststoff der eingangs geschilderten Art so auszugestalten, dass eine Klumpenbildung des Granulats weitgehend vermieden werden kann.

Die Erfindung löst die gestellte Aufgabe dadurch, dass der Durchmesser des Anschlusses für die Zufuhr des Kühl- und Förderluftstroms kleiner als der des Anschlusses für die Abfuhr ist und dass die Umfangswände unter einem zumindest angenähert gleichen Winkel von den beiden Anschlüssen für den Kühl- und Förderluftstrom gegen den Granulierkopf hin auseinanderlaufen und vom äußeren Umlaufkreis der Granuliermesser einen radialen Abstand aufweisen, der zumindest dem eineinhalbfachen Radius dieses Umlaufkreises entspricht.

Durch den im Vergleich zum Anschluss für die Zufuhr des Kühl- und Förderluftstromes größeren Anschluss für dessen Abfuhr wird zunächst das Volumen des vom Kühl- und Förderluftstrom aufgenommenen Granulats berücksichtigt, sodass es zu keiner eine Klumpenbildung unterstützenden Beschleunigung des Kühl- und Förderluftstromes im Ablaufbereich kommt. Es wird durch die übereinstimmenden Winkel der von der Zufuhr des Kühl- und Förderluftstromes divergierenden und gegen die Abfuhr konvergierenden Umfangswände des Gehäuses eine von Wirbelbildungen zumindest soweit freie Luftströmung ermöglicht, dass die in die Luftströmung vom Rotor abgeschleuderten Granulatteilchen keine für eine Klumpenbildung ausreichende Berührung erfahren. Die Mindestabstände der Umfangswände vom Umlaufkreis der Granuliermesser stellen darüber hinaus sicher, dass die vom Rotor abfliegenden Granulatteilchen von der Luftströmung durch das Gehäuse mitgerissen werden, bevor sie die Umfangswände erreichen. Durch das Zusammenspiel dieser Maßnahmen wird in überraschender Weise gewährleistet, dass auch ein vergleichsweise langsam erstarrendes Granulat klumpenfrei mit Hilfe des Kühl-und Förderluftstromes aus dem Gehäuse gefördert werden kann.

Der für eine klumpenfreie Weiterleitung des Granulats erforderliche Unterschied hinsichtlich des Strömungsquerschnittes der Anschlüsse für den Zu- und Ablauf der Füll- und Förderluftströmung kann für die jeweilige Kunststoffart durch einfache Vorversuche ermittelt werden. Im Allgemeinen kann aber davon ausgegangen werden, dass vorteilhafte Voraussetzungen gegeben sind, wenn der Durchmesser des Anschlusses für die Abfuhr des Kühl- und Förderluftstroms um das 1,1- bis 1,5-Fache größer als der des Anschlusses für die Zufuhr ist. Durch eine Steuerung der Geschwindigkeit des Kühl- und Förderluftstroms und der Umlaufgeschwindigkeit des Rotors kann zusätzlich Einfluss auf die Förderbedingungen des Granulats genommen werden. Diese Einflussgrößen bestimmen auch die Flugweite der vom Rotor abgeschleuderten Granulatteilchen. Weisen die Umfangswände vom äußeren Umlaufkreis der Granuliermesser einen radialen Abstand auf, der zwischen dem Einfachen und dem Zweifachen des Durchmessers des Umlaufkreises liegt, so ergeben sich im Zusammenhang mit den üblichen Drehzahlen des Rotors und der Förderluftgeschwindigkeit vorteilhafte Förderbedingungen für das Granulat.

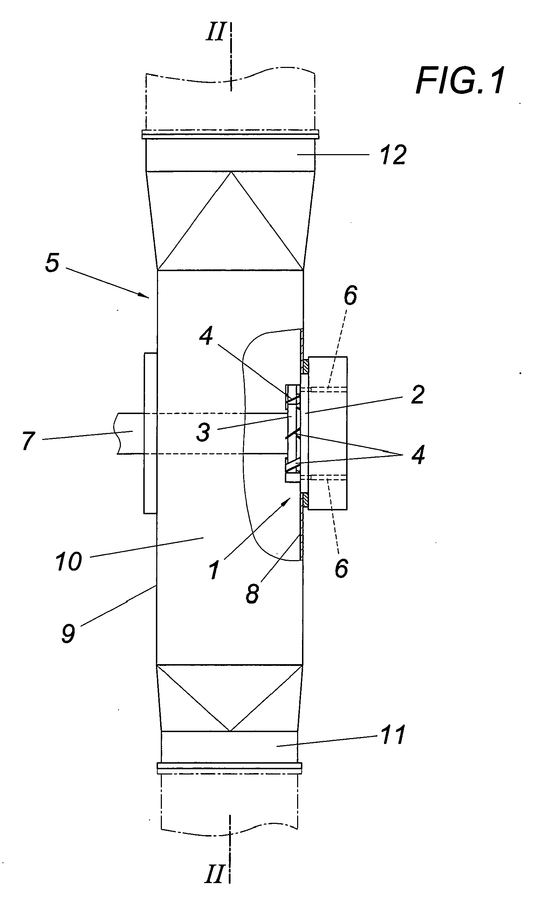

In der Zeichnung ist der Erfindungsgegenstand beispielsweise dargestellt. Es zeigen
- Fig.1: eine erfindungsgemäße Vorrichtung zum Granulieren von Kunststoff in einer zum Teil aufgerissenen Seitenansicht und
- Fig. 2: diese Vorrichtung in einem Schnitt nach der Linie II-II der Fig.1.

Die dargestellte Vorrichtung zum Granulieren von Kunststoff weist einen Granulierkopf 1 auf, der in herkömmlicher Weise aus einer Lochscheibe 2 zum Austritt von Kunststoffsträngen und einem zur Lochscheibe 2 koaxialen Rotor 3 aufweist. Dieser Rotor 3 ist mit über den Umfang verteilten Granuliermessern 4 bestückt, die die durch die Lochscheibe 2 in ein Gehäuse 5 austretenden Kunststoffstränge entsprechend dem herzustellenden Granulat schneiden. Die Zuführkanäle für die aus einem nicht dargestellten Extruder angeförderte Kunststoffschmelze sind mit 6 bezeichnet. Der Rotor 3 mit den Granuliermessern 4 wird auf der der Lochscheibe 2 gegenüberliegenden Seite durch eine Welle 7 von einem nicht dargestellten Motor her angetrieben, die die der Stirnwand 8 mit der Lochscheibe 2 gegenüberliegende Stirnwand 9 des Gehäuses 5 durchsetzt.

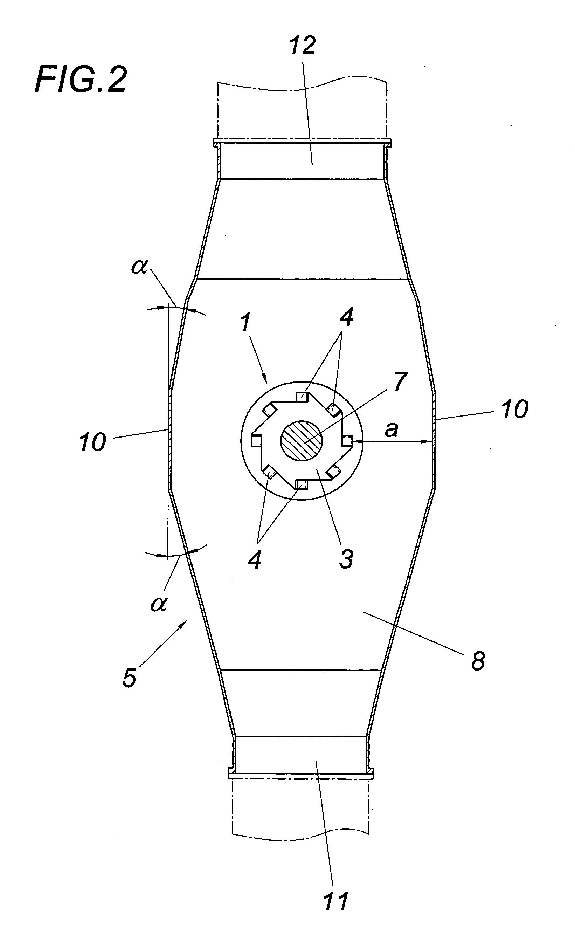

Die Stirnwände 8, 9 des Gehäuses 5 sind durch Umfangswände 10 miteinander verbunden, die zu Anschlüssen 11 und 12 einerseits für den Zulauf und anderseits für den Ablauf einer Kühl- und Förderluftströmung hin zusammenlaufen, wie dies der Fig. 2 entnommen werden kann. Die Anordnung ist dabei so getroffen, dass der Winkel α, unter dem die einander gegenüberliegenden Umfangswände 10 auseinander- bzw. zueinanderlaufen gleich gewählt ist. Da der Durchmesser des Anschlusses 12 für die Abfuhr der Kühl- und Förderluftströmung größer als der Durchmesser des Anschlusses 11 für die Zufuhr dieser Luftströmung ist, ergibt sich für den Anschluss 11 für die Strömungszufuhr ein größerer Abstand zum Rotor 3 als für den Anschluss 12.

Der Fig. 2 ist darüber hinaus zu entnehmen, dass der Abstand a des Umlaufkreises der Granuliermesser 4 von den beiden Umfangswänden 10 des Gehäuses 5 etwa dem Durchmesser des Umlaufkreises entspricht. Die vom Rotor 3 des Granulierkopfes 1 abgeschleuderten Granulatteilchen werden daher von der durch das Gehäuse 5 gekühlten Luftströmung erfasst und mitgerissen, bevor sie aufgrund der Strömungsgeschwindigkeit die Umfangswände 10 erreichen können. Dies bedeutet, dass die Umfangswände 10 keinen im Sinne der Klumpenbildung störenden Einfluss auf die Förderung der Granulatteilchen nehmen können, die in einer weitgehend laminaren Strömung aus dem Gehäuse 5 gefördert werden. Das Zusammenwirken des Wandabstandes a, der größer als der eineinhalbfache Radius des Umlaufkreises sein soll und vorzugsweise zwischen dem einfachen und zweifachen Durchmesser des Umlaufkreises liegt, der Neigungswinkel α der Umfangswände 10 gegen die Anschlüsse 11 und 12 hin und der unterschiedlichen Durchmesser der Anschlüsse 11 und 12 für die Zu- und Abfuhr des Kühl- und Förderluftstromes verhindert eine Klumpenbildung des Granulats, bevor es das Gehäuse 5 verlassen kann.

## Patentansprüche

1. Vorrichtung zum Granulieren von Kunststoff mit einem Granulierkopf (1), der eine Lochscheibe (2) zum Austritt von Kunststoffsträngen und einen zur Lochscheibe (2) koaxialen Rotor (3) mit Granuliermessern (4) zum Schneiden der aus der Lochplatte (2) austretenden Kunststoffstränge umfasst, und mit einem den Granulierkopf (1) aufnehmenden Gehäuse (5), das zur Achse des Granulierkopfes (1) senkrechte Stirnwände (8, 9) und diese Stirnwände (8, 9) verbindende Umfangswände (10) besitzt und auf zwei einander bezüglich der Granulierkopfachse gegenüberliegenden Seiten Anschlüsse (11, 12) für die Zu-und Abfuhr eines Kühl- und Förderluftstroms bildet, **dadurch gekennzeichnet, dass** der Durchmesser des Anschlusses (11) für die Zufuhr des Kühl- und Förderluftstroms kleiner als der des Anschlusses (12) für die Abfuhr ist und dass die Umfangswände (10) unter einem zumindest angenähert gleichen Winkel (α) von den beiden Anschlüssen (11, 12) für den Kühl- und Förderluftstrom gegen den Granulierkopf (1) hin auseinanderlaufen und vom äußeren Umlaufkreis der Granuliermesser (4) einen radialen Abstand aufweisen, der zumindest dem eineinhalbfachen Radius dieses Umlaufkreises entspricht.

2. Vorrichtung nach Anspruch 1, **dadurch gekennzeichnet, dass** der Durchmesser des Anschlusses (12) für die Abfuhr des Kühl- und Förderluftstroms um das 1,1- bis 1,5-Fache größer als der des Anschlusses (11) für die Zufuhr ist.

3. Vorrichtung nach Anspruch 1 oder 2, **dadurch gekennzeichnet, dass** die Umfangswände (10) vom äußeren Umlaufkreis der Granuliermesser (4) einen radialen Abstand (a) aufweisen, der zwischen dem Einfachen und dem Zweifachen des Durchmessers des Umlaufkreises liegt.
